# EUROPEAN PATENT APPLICATION

(11) **EP 4 589 786 A1**
(43) Date of publication of application: **23.07.2025**
(21) Application number: 23907669.8
(22) Date of filing: 19.12.2023
(51) Int. Cl.: H01R 13/639, H01R 13/428, H01M 50/296

(54) **CONNECTOR**

(30) Priority: 21.12.2022 KR 20220180861; 31.08.2023 KR 20230115308
(71) Applicant: LG Energy Solution, Ltd., Seoul 07335 (KR)
(72) Inventor: JUNG, Sang Eun, Daejeon 34122 (KR); YOON, Sang Hyun, Daejeon 34122 (KR)
(74) Representative: Goddar, Heinz J.
(86) International application number: PCT/KR2023/020922
(87) International publication number: WO 2024/136384

(57) **Abstract**

A connector according to an embodiment of the present invention includes a connector housing, a terminal inserted into the connector housing in a predetermined insertion direction, and a terminal block that is inserted into the connector housing, surrounds the terminal, and restricts movement of the terminal in an opposite direction to the insertion direction, wherein the connector housing is provided with a first protrusion that locks the terminal block.

## Description

### [TECHNICAL FIELD]

### CROSS-REFERENCE TO RELATED APPLICATION

This application claims priority to and the benefit of Korean Patent Application No. 10-2022-0180861, filed on December 21, 2022 and Korean Patent Application No. 10-2023-0115308, filed on August 31, 2023, the disclosure of which is incorporated herein by reference in its entirety.

### TECHNICAL FIELD

The present invention relates to a connector.

### [BACKGROUND ART]

In order to solve a high demand for new energy sources caused by depletion of oil resources and to solve the worsening environmental pollution problem, research and development of electricity production based on environmentally friendly energy sources are being conducted. In particular, research on secondary batteries that may be repeatedly charged and discharged is being actively conducted, and various research on materials, structures, processes, and stability of secondary batteries is being conducted.

Secondary batteries may be managed in units of modules or packs, and the modules or the packs in which the secondary batteries are embedded may be electrically connected through a connector. In particular, in order to effectively manage an energy storing system in which secondary batteries are embedded, power and control signals should be smoothly transmitted or received using a connector.

According to the related art, due to repeated detachment and mounting, a module or connector may be damaged or internal components of the connector may be detached by an external force.

### [DISCLOSURE]

### [TECHNICAL PROBLEM]

The present invention is directed to providing a connector that may be stably and effectively assembled.

### [TECHNICAL SOLUTION]

One aspect of the present invention provides a connector including a connector housing, a terminal inserted into the connector housing in a predetermined insertion direction, and a terminal block that is inserted into the connector housing, surrounds the terminal, and restricts movement of the terminal in an opposite direction to the insertion direction, wherein the connector housing is provided with a first protrusion configured to lock the terminal block.

### [ADVANTAGEOUS EFFECTS]

According to an embodiment of the present invention, assembly stability of the connector can increase.

According to an embodiment of the present invention, assembly convenience of the connector can increase.

### [DESCRIPTION OF DRAWINGS]

FIG. 1 is an exploded perspective view of an energy storing system according to an embodiment of the present invention.
FIG. 2 is a perspective view illustrating assembly of a battery module assembly according to the embodiment of the present invention.
FIG. 3 is a cross-sectional view illustrating a state in which battery module assemblies are temporarily mounted according to the embodiment of the present invention.
FIG. 4 is a cross-sectional view illustrating one time point of a process in which terminals are coupled according to the embodiment of the present invention.
FIG. 5 is a cross-sectional view illustrating a state in which the terminals are coupled according to the embodiment of the present invention.
FIG. 6 is a perspective view illustrating a state in which a connector assembly is coupled according to the embodiment of the present invention.
FIG. 7 is an exploded perspective view of a second connector according to the embodiment of the present invention.
FIG. 8 is an exploded perspective view of a first connector according to the embodiment of the present invention.
FIG. 9 is an exploded perspective view illustrating a terminal block of the first connector according to the embodiment of the present invention.
FIG. 10 is a perspective view illustrating the terminal block of the first connector according to the embodiment of the present invention.
FIG. 11 is a plan view of a first connector housing according to the embodiment of the present invention when viewed in one direction.
FIG. 12 is a cross-sectional view of the first connector according to the embodiment of the present invention.
FIG. 13 is a cross-sectional view illustrating a first locking structure for a first high voltage of the first connector according to the embodiment of the present invention.
FIG. 14 is a cross-sectional view illustrating a second locking structure for the first high voltage of the first connector according to the embodiment of the present invention.
FIG. 15 is a conceptual view illustrating a first locking structure and a second locking structure for the first low voltage of the first connector according to the embodiment of the present invention.
FIG. 16 is an exploded perspective view illustrating the connector assembly according to the embodiment of the present invention.
FIG. 17 is a perspective view illustrating the first connector housing according to the embodiment of the present invention.
FIG. 18 is a plan view illustrating the first connector housing according to the embodiment of the present invention from above.
FIG. 19 is a perspective view illustrating a second connector housing according to the embodiment of the present invention.
FIG. 20 is a plan view illustrating the second connector housing according to the embodiment of the present invention from above.
FIG. 21 is a perspective view illustrating an inclined part of the second connector housing according to the embodiment of the present invention.
FIG. 22 is a conceptual view illustrating sliding of the first connector and the second connector according to the embodiment of the present invention.
FIG. 23 is a perspective view illustrating a state in which a holding member is mounted on the first connector housing according to the embodiment of the present invention.
FIG. 24 is a conceptual view illustrating a state in which the holding member is mounted on the first connector housing according to the embodiment of the present invention.
FIG. 25 is a partially enlarged view illustrating a state in which the holding member is mounted on the first connector housing according to the embodiment of the present invention.
FIG. 26 is an exploded perspective view illustrating a first high-voltage terminal block and a first high-voltage terminal according to the embodiment of the present invention.
FIG. 27 is a perspective view illustrating a state in which the first high-voltage terminal block and the first high-voltage terminal according to the embodiment of the present invention are coupled.
FIG. 28 is a perspective view illustrating a terminal block mounting part of the first connector housing according to the embodiment of the present invention.
FIG. 29 is a bottom view illustrating a terminal block mounting part of the first connector according to the embodiment of the present invention.
FIG. 30 is a conceptual view illustrating a state in which the first connector is mounted on a first connector mounting part according to the embodiment of the present invention.
FIG. 31 is a bottom view illustrating a terminal block mounting part of the second connector according to the embodiment of the present invention.
FIG. 32 is a conceptual view illustrating a state in which the second connector is mounted on a second connector mounting part according to the embodiment of the present invention.

### [MODES OF THE INVENTION]

Hereinafter, embodiments of the present invention will be described in detail with reference to the accompanying drawings so that those skilled in the art to which the present invention pertains may easily implement the present invention. However, the present invention may be implemented in various different forms and is not limited or restricted to embodiments described herein.

In order to clearly describe the present invention, detailed description of a part that is not related to the invention, or related art that may unnecessarily make the subject matter of the present invention unclear will be omitted, and in the specification, in adding reference numerals to components of the drawings, the same or similar reference numerals are attached to the same or similar components throughout the entire specification.

Further, terms or words used in the specification and the appended claims should not be interpreted as being limited to common or dictionary meanings and should be interpreted with meanings and concepts corresponding to the technical spirit of the present invention according to the principle that the inventor may properly define the concepts of the terms in order to describe his/her own invention in the best way.

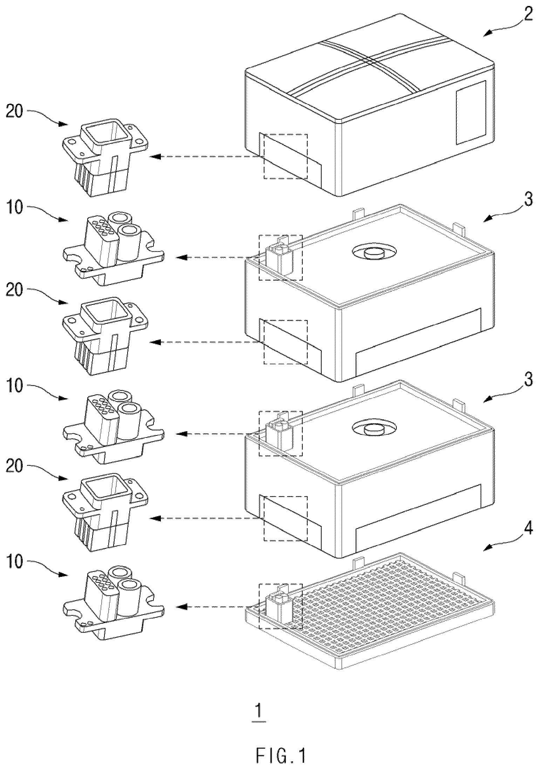

FIG. 1 is an exploded perspective view of an energy storing system according to an embodiment of the present invention.

An energy storing system 1 may include a battery control unit 2. The battery control unit 2 may perform overall control of the energy storing system 1.

The energy storing system 1 may include a battery module assembly 3. The battery module assembly 3 may be an assembly in which battery modules or batteries are embedded. The battery module assembly 3 may be provided in a plurality of battery module assemblies 3.

The energy storing system 1 may include a bottom plate assembly 4. The bottom plate assembly 4 may form a lower exterior of the energy storing system 1.

The energy storing system 1 may be provided in a form in which the battery module assemblies 3 are stacked on the bottom plate assembly 4 and the battery control unit 2 is stacked on the battery module assemblies 3.

The energy storing system 1 may include a first connector 10 and a second connector 20. For example, the first connector 10 and the second connector 20 may electrically connect the bottom plate assembly 4, the battery module assemblies 3, and the battery control unit 2 in a stacked form.

In detail, for example, the first connector 10 and the second connector 20 may be arranged above and below each of the battery module assemblies 3. In this case, the first connector 10 may be disposed in the bottom plate assembly 4, and the second connector 20 may be disposed in the battery control unit 2. However, the present invention is not limited thereto.

As the energy storing system 1 is provided as described above, the bottom plate assembly 4, the battery module assemblies 3, and the battery control unit 2 may be electrically connected by the first connector 10 and the second connector 20.

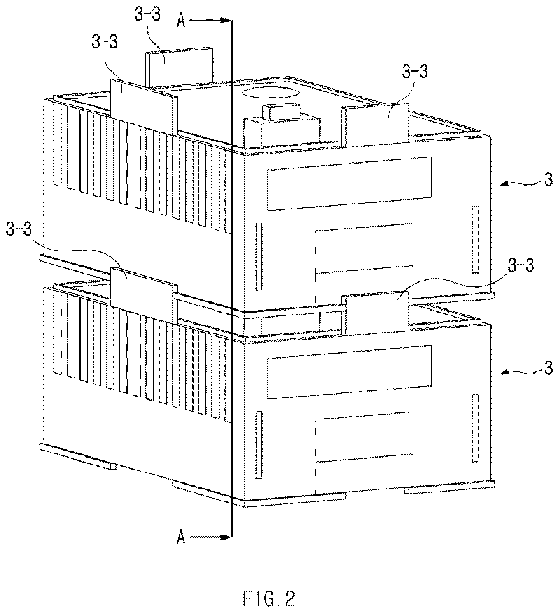

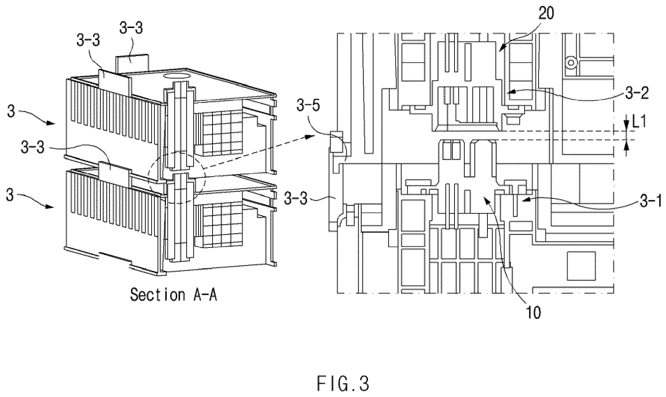

FIG. 2 is a perspective view illustrating assembly of a battery module assembly according to the embodiment of the present invention, and FIG. 3 is a cross-sectional view illustrating a state in which battery module assemblies are temporarily mounted according to the embodiment of the present invention.

The energy storing system 1 may include a plurality of battery module assemblies 3. For convenience of description, among the two battery module assemblies 3, one disposed on a lower side may be defined as a first battery module assembly, and the other one disposed on an upper side may be defined as a second battery module assembly.

For example, the energy storing system 1 may include the first battery module assembly and the second battery module assembly mounted on the first battery module assembly.

The first connector 10 may be mounted on a first connector mounting part 3-1 of the first battery module assembly. The second connector 20 may be mounted on a second connector mounting part 3-2 of the second battery module assembly.

The first battery module assembly may include a module guide 3-3. The module guide 3-3 may be provided to guide mounting with the second battery module assembly.

The module guide 3-3 may be provided as a plurality of module guides 3-3.

In detail, for example, the first battery module assembly may have the form of a rectangular parallelepiped. In this case, the module guide 3-3 may be formed in two or more edges among edges of the first battery module assembly when viewed from the upper side.

The module guide 3-3 may be formed at an edge of the first battery module assembly. The module guide 3-3 may be provided to extend upward from the edge of the first battery module assembly.

The second battery module assembly may include a guide mounting part 3-5. The guide mounting part 3-5 may be provided for the module guide 3-3 to be mounted thereon.

The guide mounting part 3-5 may be provided as a plurality of guide mounting parts 3-5. For example, the module guide 3-3 may be provided as a plurality of module guides 3-3 to extend upward from the edge of the first battery module assembly, and the second battery module assembly may include the guide mounting part 3-5 on which the module guide 3-3 is mounted.

Both the module guide 3-3 and the guide mounting part 3-5 may be provided in the battery module assembly 3. For example, the module guide 3-3 may be formed at an upper edge of the battery module assembly 3, and the guide mounting part 3-5 may be formed at a lower edge thereof. In this case, the battery module assemblies 3 having the same form may be easily stacked.

The formation positions of the module guide 3-3 and the guide mounting part 3-5 are not limited to the above positions.

The first battery module assembly may include the first connector 10 exposed at the upper side for the first battery module assembly to be electrically connected to the second battery module assembly.

The second battery module assembly may include the second connector 20 exposed at the lower side for the second battery module assembly to be electrically connected to the first battery module assembly.

The first connector 10 and the second connector 20 may be electrically connected to each other.

The first connector 10 and the second connector 20 may be spaced a predetermined distance L1 from each other when the module guide 3-3 is temporarily mounted on the guide mounting part 3-5. The predetermined distance L1 may be in a range of 4 mm to 5 mm, but the present invention is not limited thereto.

As described above, when the module guide 3-3 is temporarily mounted on the guide mounting part 3-5, the first connector 10 and the second connector 20 are spaced the predetermined distance L1 from each other, and thus damage to the first connector 10 and the second connector 20 due to collision can be prevented.

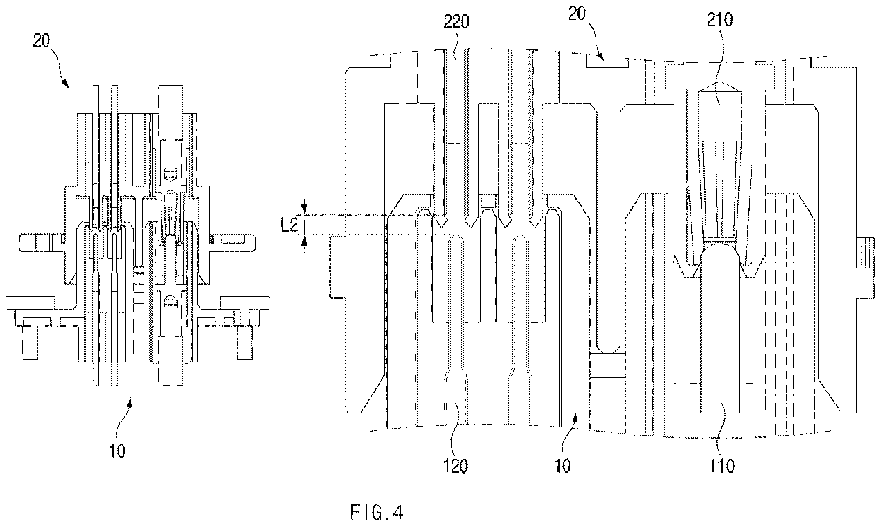

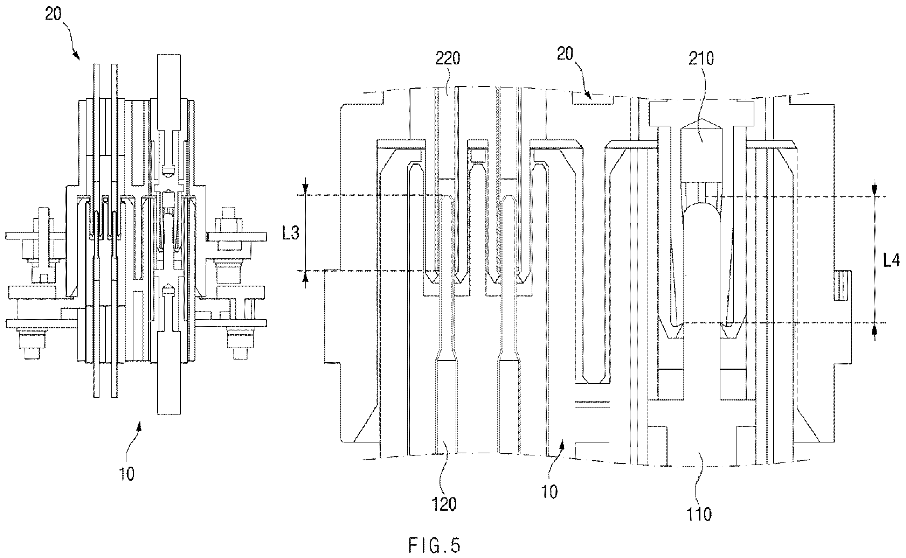

FIG. 4 is a cross-sectional view illustrating one time point of a process in which terminals are coupled according to the embodiment of the present invention, and FIG. 5 is a cross-sectional view illustrating a state in which the terminals are coupled according to the embodiment of the present invention.

After the temporary mounting, the first connector 10 and the second connector 20 may be completely mounted by self-weight of the second battery module assembly. For example, after the temporary mounting, the first connector 10 and the second connector 20 may be fastened due to a weight of the second battery module assembly temporarily mounted on the first battery module assembly.

The first connector 10 may include a first high-voltage terminal 110 and a first low-voltage terminal 120.

The second connector 20 may include a second high-voltage terminal 210 and a second low-voltage terminal 220.

When the first high-voltage terminal 110 and the second high-voltage terminal 210 come into contact with each other, the first low-voltage terminal 120 and the second low-voltage terminal 220 may be spaced a predetermined distance L2 from each other. The predetermined distance L2 by which the first low-voltage terminal 120 and the second low-voltage terminal 220 are spaced apart from each other may be in a range of 1 mm to 1.5 mm, but the present invention is not limited thereto.

A radius of the first high-voltage terminal 110 and the second high-voltage terminal 210 may be greater than a radius of the first low-voltage terminal 120 and the second low-voltage terminal 220.

Rigidity of the first high-voltage terminal 110 and the second high-voltage terminal 210 may be greater than rigidity of the first low-voltage terminal 120 and the second low-voltage terminal 220.

When the first high-voltage terminal 110 is inserted into the second high-voltage terminal 210, the second low-voltage terminal 220 may be provided in a state before being inserted into the first low-voltage terminal 120.

As described above, when the first high-voltage terminal 110 is inserted into the second high-voltage terminal 210, the second low-voltage terminal 220 is provided in a state before being inserted into the first low-voltage terminal 120. Thus, the high-voltage terminals having relatively great rigidity and radii may first be coupled, and the low-voltage terminals having relatively low rigidity may be coupled later. Accordingly, damage to the terminals can be prevented. Further, the high-voltage terminals may be first inserted and thus guide the low-voltage terminals.

An overlapping length when the first high-voltage terminal 110 is completely inserted into the second high-voltage terminal 210 may be in a range of 4 mm to 5 mm. Further, an overlapping length when the first low-voltage terminal 120 is completely inserted into the second low-voltage terminal 220 may be in a range of 3.5 mm to 4 mm. These numerical ranges are illustrative, and the present invention is not limited thereto.

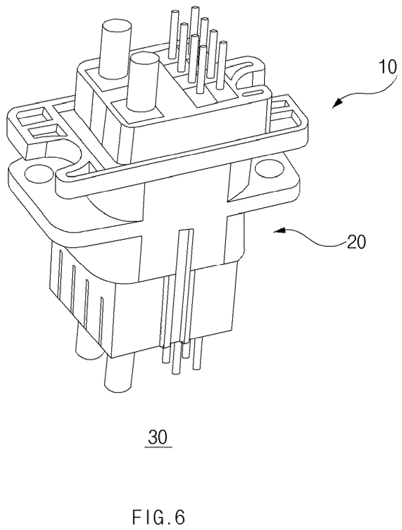

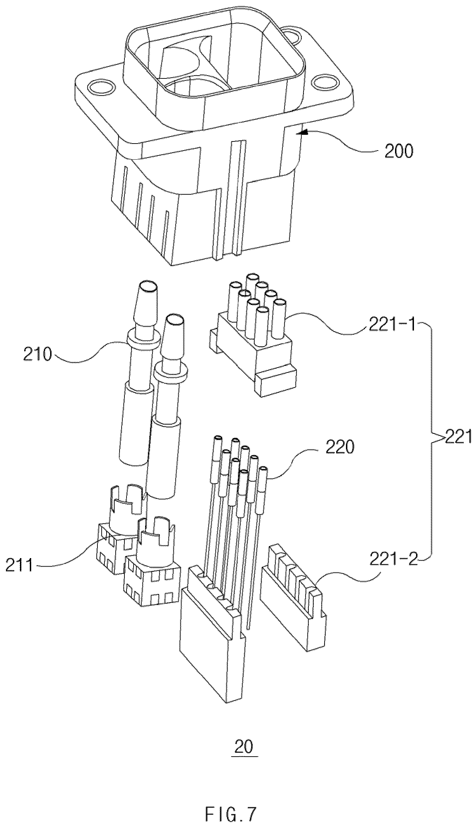

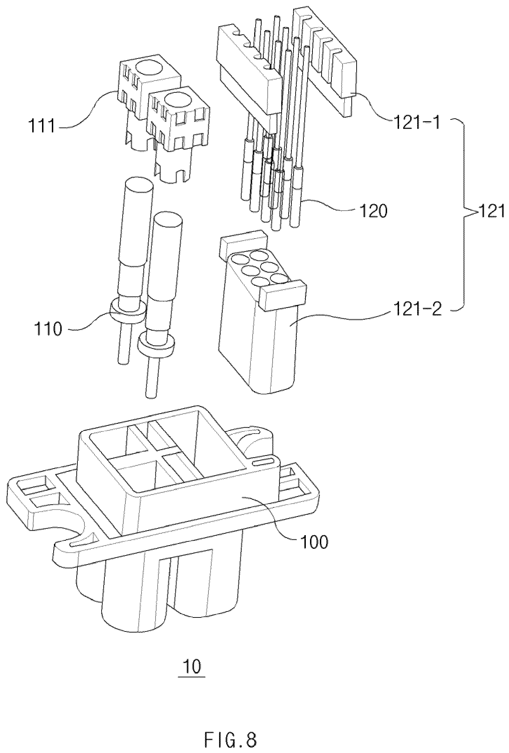

FIG. 6 is a perspective view illustrating a state in which a connector assembly is coupled according to the embodiment of the present invention, FIG. 7 is an exploded perspective view of a second connector according to the embodiment of the present invention, and FIG. 8 is an exploded perspective view of a first connector according to the embodiment of the present invention. Descriptions of the above-described embodiments may be applied equally or similarly to the present embodiment.

The first connector 10 and the second connector 20 may be coupled to each other to form a connector assembly 30.

The second connector 20 may include a second connector housing 200. The second connector housing 200 may form an exterior of the second connector 20.

The second connector 20 may include the terminals 210 and 220. The terminals 210 and 220 may be inserted into the second connector housing 200 in a predetermined insertion direction.

The second connector 20 may include terminal blocks 211 and 221.

The terminal blocks 211 and 221 may be inserted into the second connector housing 200, surround the terminals 210 and 220, and restrict the terminals 210 and 220 from moving in an opposite direction to an insertion direction. The second connector housing 200 may be provided with a protrusion provided to lock the terminal blocks 211 and 221.

The terminals 210 and 220 may include the second high-voltage terminal 210 and the second low-voltage terminal 220.

The terminal blocks 211 and 221 may include the second high-voltage terminal block 211 and the second low-voltage terminal block 221.

The second low-voltage terminal block 221 may include a second low-voltage upper block 221-1 and a second low-voltage lower block 221-2.

The first connector 10 may include a first connector housing 100. The first connector housing 100 may form an exterior of the first connector 10.

The first connector 10 may include the terminals 110 and 120. The terminals 110 and 120 may be inserted into the first connector housing 100 in a predetermined insertion direction.

The first connector 10 may include terminal blocks 111 and 121.

The terminal blocks 111 and 121 may be inserted into the first connector housing 100, surround the terminals 110 and 120, and restrict the terminals 110 and 120 from moving in an opposite direction to an insertion direction. The first connector housing 100 may be provided with a protrusion provided to lock the terminal blocks 111 and 121.

The terminals 110 and 120 may include the first high-voltage terminal 110 and the first low-voltage terminal 120.

The terminal blocks 111 and 121 may include the first high-voltage terminal block 111 and the first low-voltage terminal block 121.

The first low-voltage terminal block 121 may include a first low-voltage upper block 121-1 and a first low-voltage lower block 121-2.

The following description of the first connector 10 may be applied equally or similarly to the second connector 20.

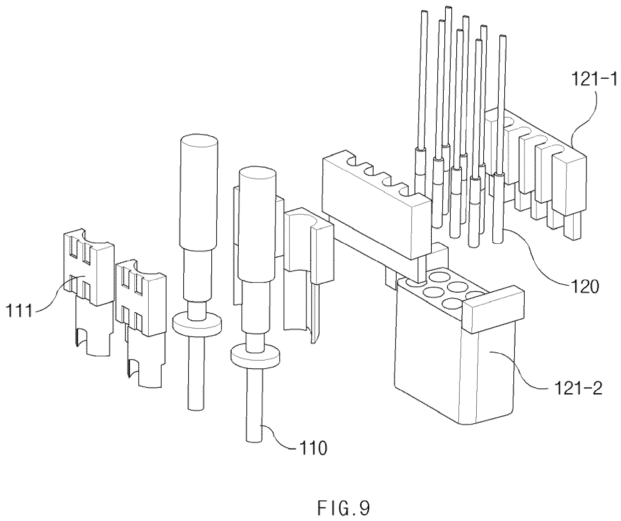

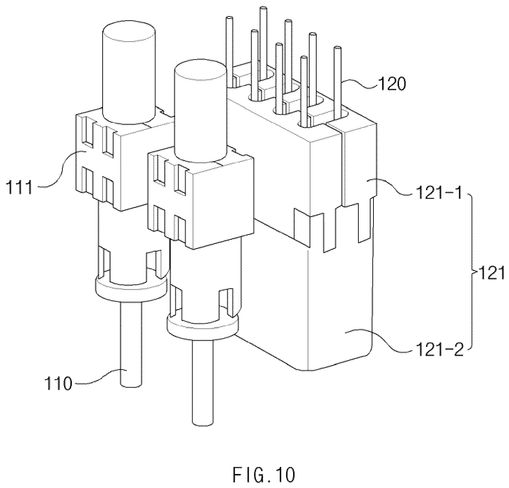

FIG. 9 is an exploded perspective view illustrating a terminal block of the first connector according to the embodiment of the present invention, and FIG. 10 is a perspective view illustrating the terminal block of the first connector according to the embodiment of the present invention. Descriptions of the above-described embodiments may be applied equally or similarly to the present embodiment.

The first connector 10 may include the first high-voltage terminal block 111 and the first low-voltage terminal block 121.

The first high-voltage terminal block 111 may be provided to surround the first high-voltage terminal 110.

The first low-voltage terminal block 121 may include the first low-voltage upper block 121-1 and the first low-voltage lower block 121-2.

The first low-voltage lower block 121-2 may be provided to surround the first low-voltage terminal 120.

The first low-voltage upper block 121-1 may support the first low-voltage lower block 121-2 from the outside in a stacked form such that the first low-voltage lower block 121-2 is restricted from moving in an opposite direction to an insertion direction in a state in which the first low-voltage lower block 121-2 is inserted into the first connector housing 100.

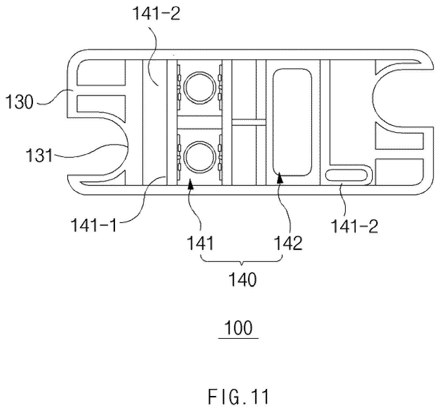

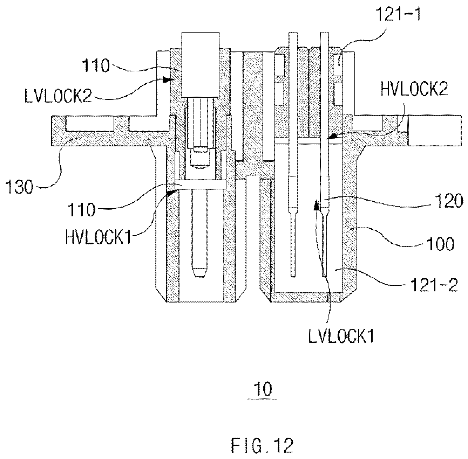

FIG. 11 is a plan view of a first connector housing according to the embodiment of the present invention when viewed in one direction. FIG. 12 is a cross-sectional view of the first connector according to the embodiment of the present invention. Descriptions of the above-described embodiments may be applied equally or similarly to the present embodiment.

The first connector housing 100 may include a terminal block mounting part 140.

The terminal block mounting part 140 may include a first high-voltage terminal block mounting portion 141 and a first low-voltage terminal block mounting portion 142.

The first low-voltage terminal block mounting portion 142 may be provided for the first low-voltage terminal 120 to be inserted thereinto in a predetermined insertion direction.

The first low-voltage terminal block 121 may be inserted into the first low-voltage terminal block mounting portion 142 while surrounding the first low-voltage terminal 120.

The first low-voltage terminal block 121 may include the first low-voltage upper block 121-1 and the first low-voltage lower block 121-2.

The first low-voltage lower block 121-2 may be disposed inside the first low-voltage terminal block mounting portion 142 while surrounding the first low-voltage terminal 120.

The first low-voltage upper block 121-1 may support the first low-voltage lower block 121-2 from the outside in a stacked form such that the first low-voltage lower block 121-2 is restricted from moving in an opposite direction to an insertion direction in a state in which the first low-voltage lower block 121-2 is inserted into the first connector housing 100.

The first connector 10 may include the first high-voltage terminal block mounting portion 141. For example, the first high-voltage terminal block mounting portion 141 may be formed in the first connector housing 100.

The first connector 10 may include the first high-voltage terminal 110. The first high-voltage terminal 110 may be inserted into the first high-voltage terminal block mounting portion 141 in a predetermined insertion direction.

The first connector 10 may include the first high-voltage terminal block 111. The first high-voltage terminal block 111 may be inserted into the first high-voltage terminal block mounting portion 141 while surrounding the first high-voltage terminal 110.

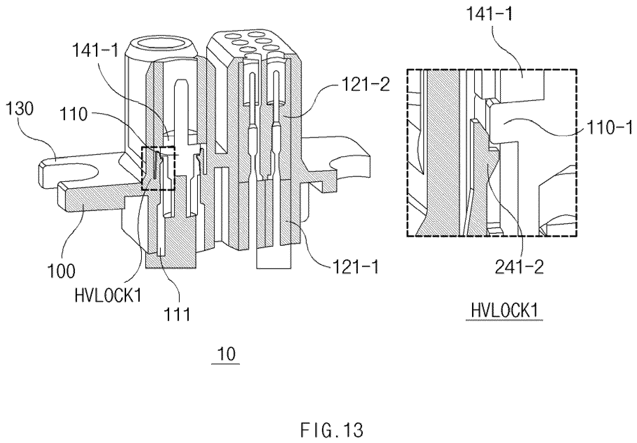

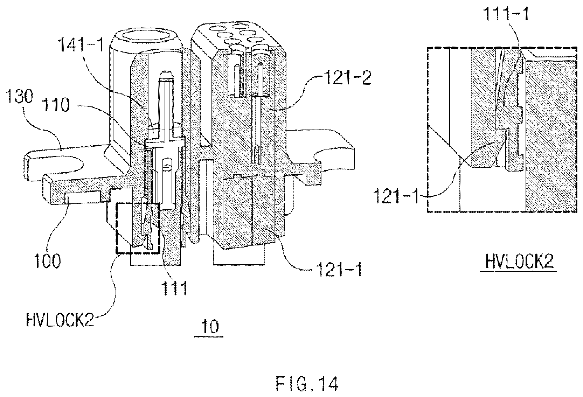

FIG. 13 is a cross-sectional view illustrating a first locking structure for a first high voltage of the first connector according to the embodiment of the present invention. FIG. 14 is a cross-sectional view illustrating a second locking structure for the first high voltage of the first connector according to the embodiment of the present invention. Descriptions of the above-described embodiments may be applied equally or similarly to the present embodiment.

The first connector housing 100 may include a stopper part 141-1. The stopper part 141-1 may support the first high-voltage terminal 110 such that the first high-voltage terminal 110 is not inserted thereinto in an insertion direction to a predetermined degree or more.

The first connector housing 100 may include a first protrusion 141-2. The first protrusion 141-2 may protrude toward an interior of the first connector housing 100 to restrict movement of the first high-voltage terminal block 111 in a direction opposite to an insertion direction.

The first connector housing 100 may include a second protrusion 141-3. The second protrusion 141-3 may protrude to the interior of the first connector housing 100 to restrict movement of the first high-voltage terminal 110 in an opposite direction to an insertion direction.

The first high-voltage terminal 110 may include a protrusion 110-1. The protrusion 110-1 may protrude in a direction crossing a direction in which the first high-voltage terminal 110 is inserted into the first connector housing 100. For example, the protrusion 110-1 of the first high-voltage terminal 110 may protrude outward to be caught by the second protrusion 141-3. The second protrusion 141-3 may protrude to the interior of the first connector housing 100 to lock the protrusion 110-1. The protrusion 110-1 may also be understood as a terminal protrusion.

The first high-voltage terminal block 111 may be provided with a block protrusion 111-1 that protrudes outward. For example, the block protrusion 111-1 may protrude outward to be caught by the first protrusion 141-2. In detail, for example, when a force is applied in an opposite direction to a direction in which the first high-voltage terminal block 111 is inserted into the first connector housing 100, the first protrusion 141-2 may protrude to the interior of the first connector housing 100 to restrict movement of the first high-voltage terminal block 111 and may be caught by the block protrusion 111-1.

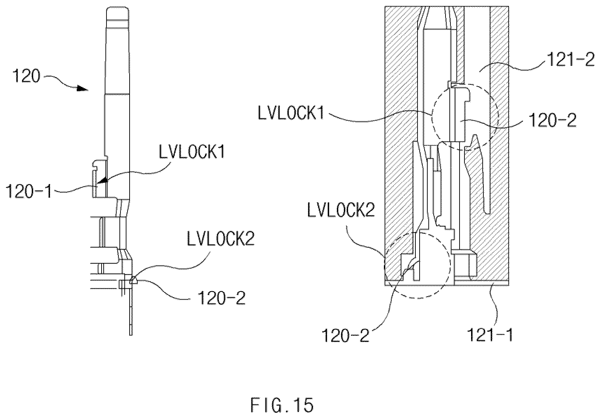

FIG. 15 is a conceptual view illustrating a first locking structure and a second locking structure for the first low voltage of the first connector according to the embodiment of the present invention. Descriptions of the above-described embodiments may be applied equally or similarly to the present embodiment.

The first low-voltage terminal 120 may include a protrusion 120-1 that protrudes in a direction crossing a direction in which the first low-voltage terminal 120 is inserted into the first connector housing 100. The protrusion 120-1 may also be understood as a terminal protrusion. The protrusion 120-1 may protrude toward the first low-voltage terminal block 121 and be caught. In detail, for example, the protrusion 120-1 may protrude in a direction crossing a direction in which the first low-voltage terminal 120 is inserted into the first connector housing 100 and may be caught by the first low-voltage lower block 121-2.

The first low-voltage terminal 120 may include a protrusion 120-2 that protrudes to be caught by the first low-voltage terminal block 121. The protrusion 120-2 may also be understood as a terminal protrusion. In detail, for example, the protrusion 120-2 may extend toward the first low-voltage upper block 121-1 and may protrude to be supported by the first low-voltage upper block 121-1 when a force is applied in an opposite direction to an insertion direction.

For convenience of description, the first low-voltage lower block 121-2 and the first low-voltage upper block 121-1 may be referred to as a first terminal block and a second terminal block, respectively.

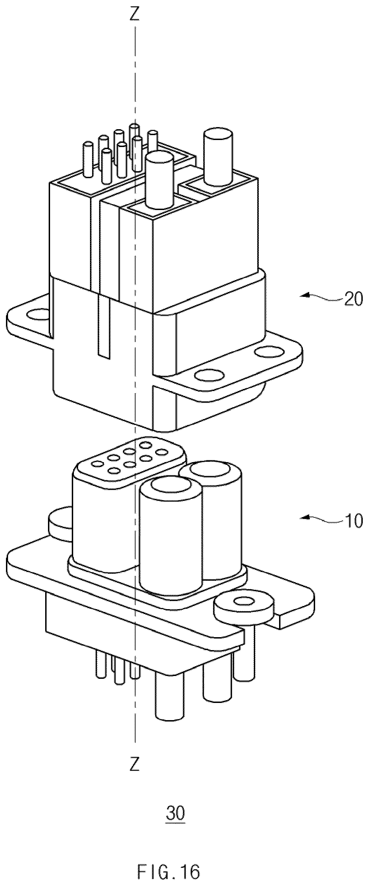

FIG. 16 is an exploded perspective view illustrating the connector assembly according to the embodiment of the present invention. Descriptions of the above-described embodiments may be applied equally or similarly to the present embodiment. FIG. 16 illustrates a state in which a coupling axis is rotated 180 degrees as compared to FIG. 6 illustrating the connector assembly 30.

The first connector 10 and the second connector 20 may be coupled to each other to form a connector assembly 30. FIG. 16 may illustrate a state in which the first connector 10 and the second connector 20 may form the connector assembly 30 along a coupling axis Z-Z'.

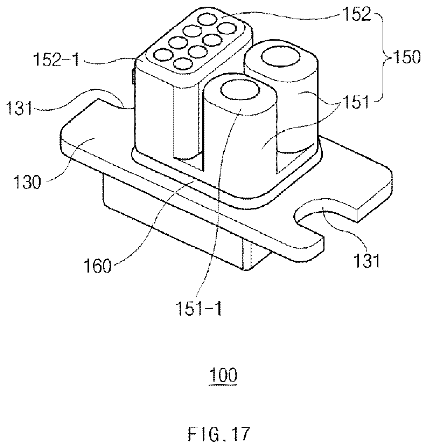

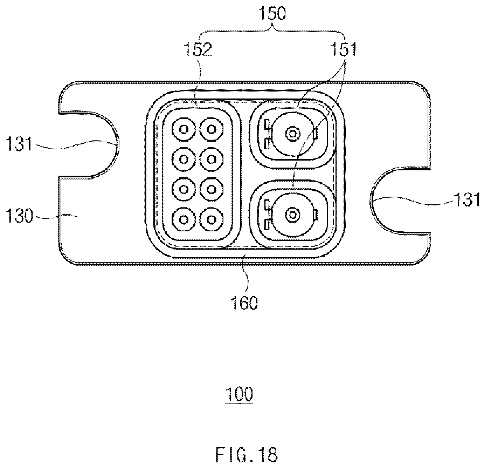

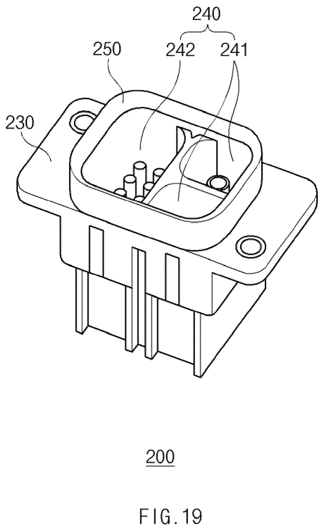

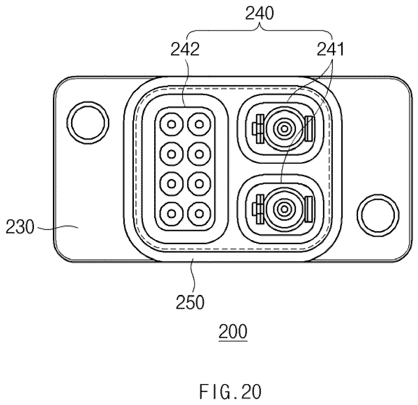

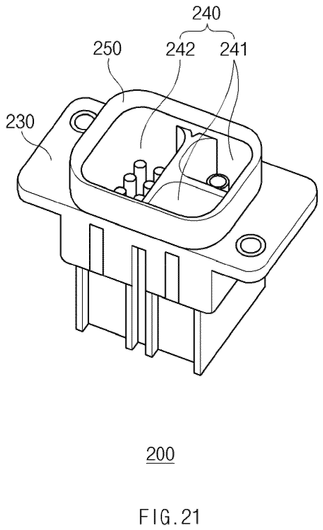

FIG. 17 is a perspective view illustrating the first connector housing according to the embodiment of the present invention, FIG. 18 is a plan view illustrating the first connector housing according to the embodiment of the present invention from above, FIG. 19 is a perspective view illustrating a second connector housing according to the embodiment of the present invention, FIG. 20 is a plan view illustrating the second connector housing according to the embodiment of the present invention from above, and FIG. 21 is a perspective view illustrating an inclined part of the second connector housing according to the embodiment of the present invention. Descriptions of the above-described embodiments may be applied equally or similarly to the present embodiment.

The first connector 10 may include the first connector housing 100.

The first connector housing 100 may include a first body part 130.

The first connector housing 100 may include a holding member mounting portion 231. The holding member mounting portion 231 may be provided in a form in which a through-hole is formed at an edge of the first body part 130.

The first connector housing 100 may include a first connection part 150. For example, the first connection part 150 may protrude from the first body part 130 in one direction. The one direction may be an upward direction along the coupling axis Z-Z'.

The first connection part 150 may include a first high-voltage connection portion 151. For example, the first high-voltage connection portion 151 may form an exterior surrounding the first high-voltage terminal 110.

The first connection part 150 may include a first low-voltage connection portion 152. For example, the first low-voltage connection portion 152 may form an exterior surrounding the first low-voltage terminal 120.

The first high-voltage connection portion 151 and the first low-voltage connection portion 152 may extend in the one direction while spaced apart from the first body part 130.

The first connection part 150 may include rounded portions 151-1 and 152-1. For example, the rounded portion 151-1 and the rounded portion 152-1 may be slidably formed at distal ends of the first high-voltage connection portion 151 and the first low-voltage connection portion 152.

The first high-voltage connection portion 151 and the first low-voltage connection portion 152 may include the rounded portion 151-1 and the rounded portion 152-1 so that the first high-voltage connection portion 151 and the first low-voltage connection portion 152 may slide on an inclined part 250, which will be described below.

The first connector housing 100 may include a corresponding inclined part 160. The corresponding inclined part 160 may have a shape corresponding to the inclined part 250, which will be described below.

The corresponding inclined part 160 may be formed at an edge of the first connection part 150 and may have an inclination corresponding to the inclined part 250 so that the inclined part 250, which will be described below, may be seated thereon.

The corresponding inclined part 160 may have a trajectory surrounding the first high-voltage connection portion 151 and the first low-voltage connection portion 152 when viewed from above. In other words, when viewed in an insertion direction (or along the coupling axis Z-Z'), the first high-voltage connection portion 151 and the first low-voltage connection portion 152 may be provided inside the corresponding inclined part 160.

The second connector housing 200 may include a second body part 230.

The second connector housing 200 may include a second connection part 240. The second connection part 240 may be recessed from the second body part 230 in an insertion direction of the first connection part 150 to accommodate the first connection part 150.

The second connection part 240 may include a second high-voltage connection portion 241 and a second low-voltage connection portion 242. The second high-voltage connection portion 241 and the second low-voltage connection portion 242 may be recessed from the second body part 230 in a form corresponding to the first high-voltage connection portion 151 and the first low-voltage connection portion 152.

The inclined part 250 inclined such that the first connection part 150 may slide thereon may be formed at an edge of the second connection part 240.

The inclined part 250 may extend from the edge of the second connection part 240 to be inclined in the insertion direction (or along the coupling axis Z-Z') in a direction away from the coupling axis Z-Z' in the insertion direction.

The second high-voltage connection portion 241 and the second low-voltage connection portion 242 may be provided inside the inclined part 250 when viewed in the insertion direction (or along the coupling axis Z-Z').

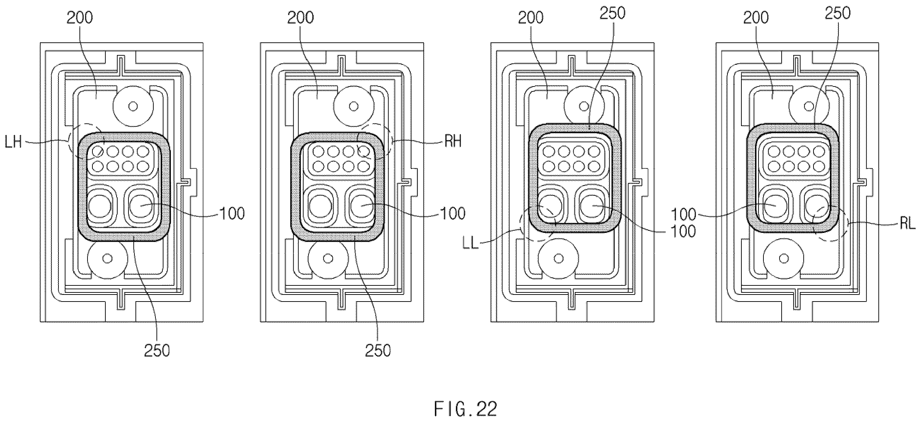

FIG. 22 is a conceptual view illustrating sliding of the first connector and the second connector according to the embodiment of the present invention. Descriptions of the above-described embodiments may be applied equally or similarly to the present embodiment.

When the second connector 20 is mounted on the first connector 10, the first connector 10 and the second connector 20 may be mounted by self-weight of the battery module assembly 3.

When the second connector 20 is mounted on the first connector 10 by the self-weight of the battery module assembly 3 in a temporarily mounted state, the first connection part 150 of the first connector 10 may be accurately inserted into the second connection part 240 of the second connector 20 without collision or contact therebetween.

When the second connector 20 is mounted on the first connector 10 by the self-weight of the battery module assembly 3 in a temporarily mounted state, the first connection part 150 of the first connector 10 may sometimes collide with or come into contact with the second connection part 240 of the second connector 20. In this case, the first connection part 150 may collide with or come into contact with the inclined part 250.

The insertion of the first connection part 150 into the second connector 20 due to inclination of the inclined part 250 may be guided. For example, when viewed from above along the coupling axis Z-Z', the connection part 150 may be in contact with a left upper end LH, a right upper end RH, a left lower end LL, and a right lower end RL. Since inclined surfaces may be formed at the left upper end LH, the right upper end RH, the left lower end LL, and the right lower end RL, the connection part 150 may be guided into the second connector 20.

In the above description, the left upper end LH, the right upper end RH, the left lower end LL, and the right lower end RL have been described as examples, but the same may be applied to any point of the inclined part 250.

Since the rounded portions 151-1 and 152-1 are formed in the first connection part 150, the insertion may be guided more effectively with minimal damage or minimal wear as compared to the inclined part 250.

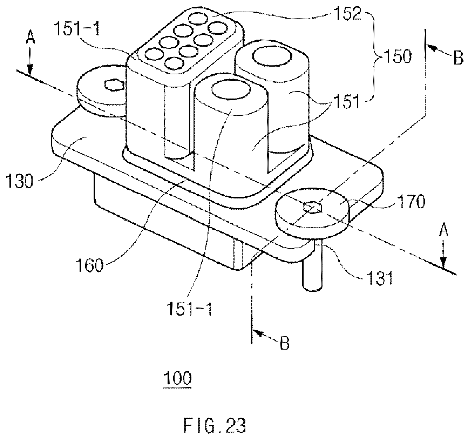

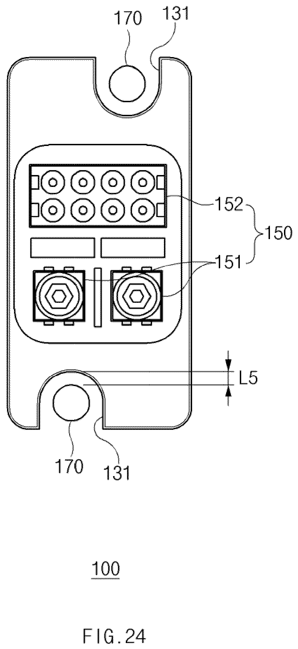

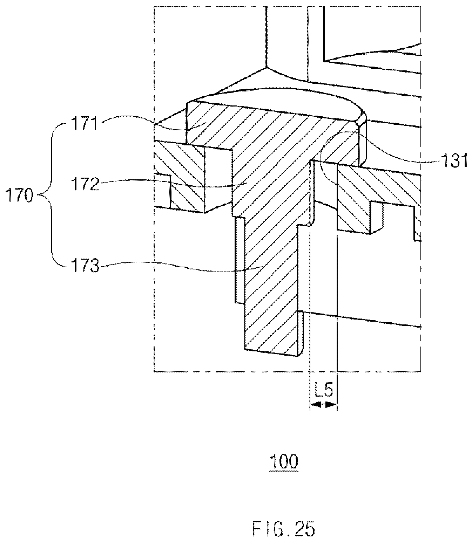

FIG. 23 is a perspective view illustrating a state in which a holding member is mounted on the first connector housing according to the embodiment of the present invention, FIG. 24 is a conceptual view illustrating a state in which the holding member is mounted on the first connector housing according to the embodiment of the present invention, and FIG. 25 is a partially enlarged view illustrating a state in which the holding member is mounted on the first connector housing according to the embodiment of the present invention. Descriptions of the above-described embodiments may be applied equally or similarly to the present embodiment.

The first connector 10 may include a holding member 170.

The holding member 170 may be mounted on the first body part 130 so that the first connector 10 may move within a predetermined range. For example, when the second connector 20 is mounted on the first connector 10, the holding member 170 may be mounted on the first body part 130 so that the first connector 10 may move within a predetermined range. In detail, the holding member 170 may be mounted on the holding member mounting portion 231 of the first body part 130.

The holding member 170 may movably couple the first body part 130 and the battery module assembly 3 (or the first connector mounting part 3-1) that is a target on which the first body part 130 is mounted.

A holding member mounting portion 131 having a through-hole formed for the holding member 170 to be mounted thereon may be provided in the first body part 130. The through-hole formed in the holding member mounting portion 131 may have a hemispherical shape. The hemispherical shape may allow a first portion 172 of the holding member 170 and the holding member mounting portion 131 to be spaced a certain distance from each other.

A portion of the holding member 170 may be in contact with the holding member mounting portion 131, and another portion thereof may be spaced apart from the holding member mounting portion 131.

The holding member 170 may include a head portion 171. For example, the head portion 171 may be a portion having a diameter greater than the through-hole and seated on the holding member mounting portion 131.

The holding member 170 may include the first portion 172. For example, the first portion 172 may be a portion connected to the head portion 171 and spaced a predetermined distance L3 from the holding member mounting portion 131. Further, the first portion 172 may have a length corresponding to a thickness of the first body part 130.

The holding member 170 may include a second portion 173. For example, the second portion 173 may be a portion connected to the first portion 172 and having a smaller outer diameter than the first portion 172. However, the outer diameter of the second portion 173 does not necessarily have to be smaller than that of the first portion 172, but the present invention is not limited thereto. The second portion 173 may be coupled to the battery module assembly 3 (or the first connector mounting part 3-1).

When the second connector 20 is mounted on the first connector 10 and the first connector 10 may move within a predetermined range, the mounting of the second connector 20 on the first connector 10 may be guided while damage or wear is minimized. In other words, since the first connector 10 may freely move a certain distance L5, the connection part 150 may be effectively guided into the second connector 20.

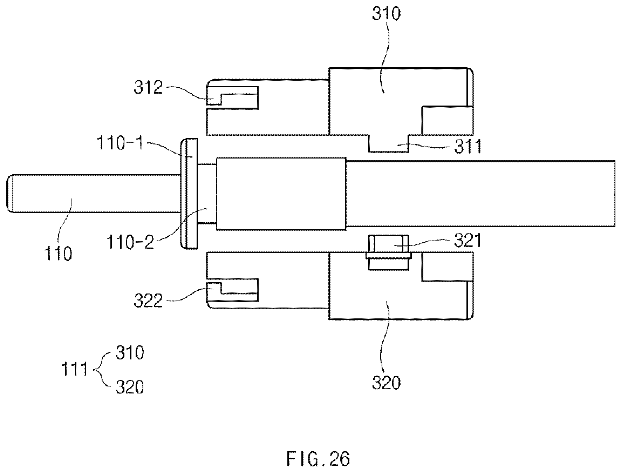

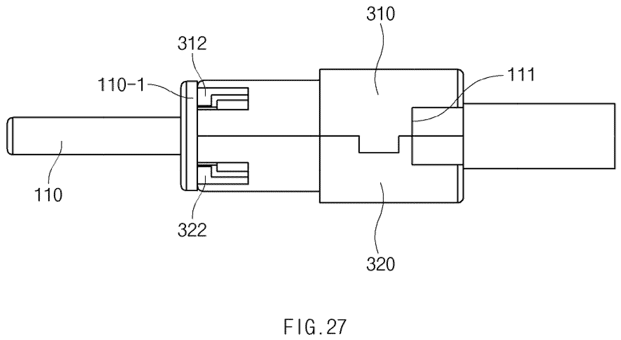

FIG. 26 is an exploded perspective view illustrating a first high-voltage terminal block and a first high-voltage terminal according to the embodiment of the present invention. FIG. 27 is a perspective view illustrating a state in which the first high-voltage terminal block and the first high-voltage terminal according to the embodiment of the present invention are coupled. Descriptions of the above-described embodiments may be applied equally or similarly to the present embodiment.

The first high-voltage terminal block 111 may include a first block 310. For example, the first block 310 may surround one surface of the first high-voltage terminal 110.

The first high-voltage terminal block 111 may include a second block 320. For example, the second block 320 may be coupled to the first block 310 and may surround the other surface of the first high-voltage terminal 110.

The first high-voltage terminal block 111 may also surround a portion of an electric wiring line connected to the first high-voltage terminal 110.

The first high-voltage terminal 110 may include a groove portion 110-2. For example, the groove portion 110-2 may be formed by recessing a portion of the first high-voltage terminal 110.

The first high-voltage terminal block 111 may include a catching portion 312. The catching portion 312 may be provided such that a distal end of the first high-voltage terminal block 111 at the first high-voltage terminal 110 is caught by the groove portion 110-2.

The first block 310 may include a first coupling portion 311 for press fitting.

The second block 320 may include a second coupling portion 321 for press fitting.

The first coupling portion 311 and the second coupling portion 321 are press-fitted so that the first high-voltage terminal block 111 can be mounted on the first high-voltage terminal 110.

The first high-voltage terminal 110 may include the protrusion 110-1. The protrusion 110-1 may protrude to restrict movement of the first high-voltage terminal block 111 in a longitudinal direction of the first high-voltage terminal 110.

The first high-voltage terminal block 111 may include the protrusion 111-1 protruding toward the first connector housing 100, and thus movement thereof with respect to the first connector housing 100 may be restricted.

When a force is applied to the first high-voltage terminal block 111 in an opposite direction to an insertion direction, the first connector housing 100 may support the protrusion 111-1 and thus restrict movement of the first high-voltage terminal block 111.

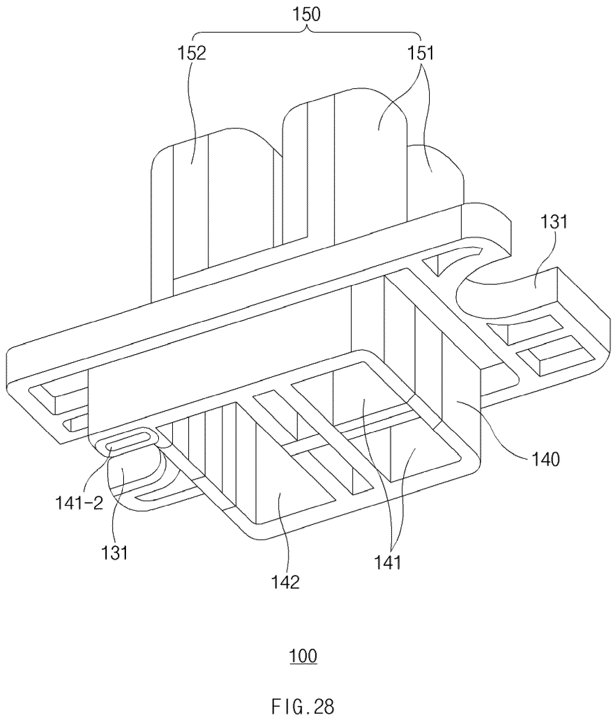

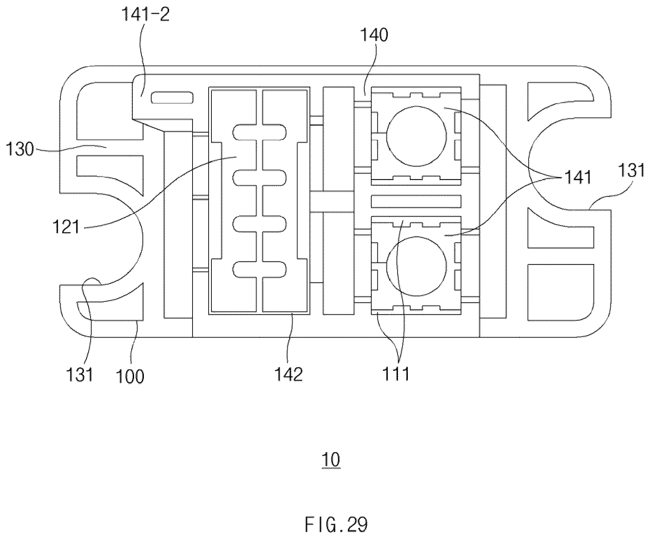

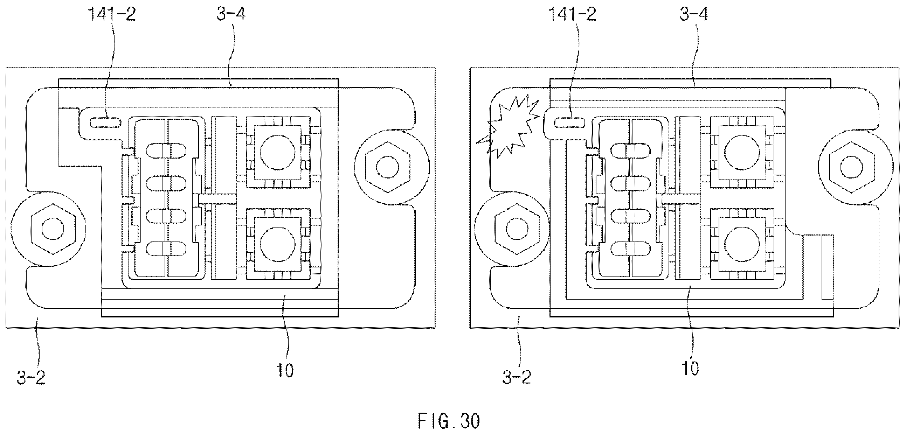

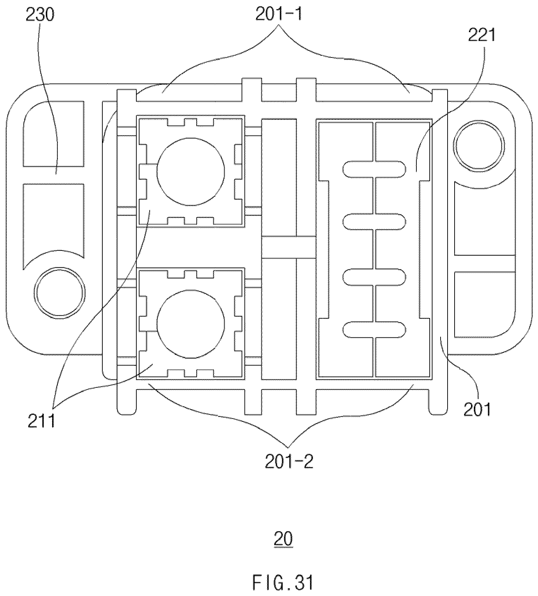

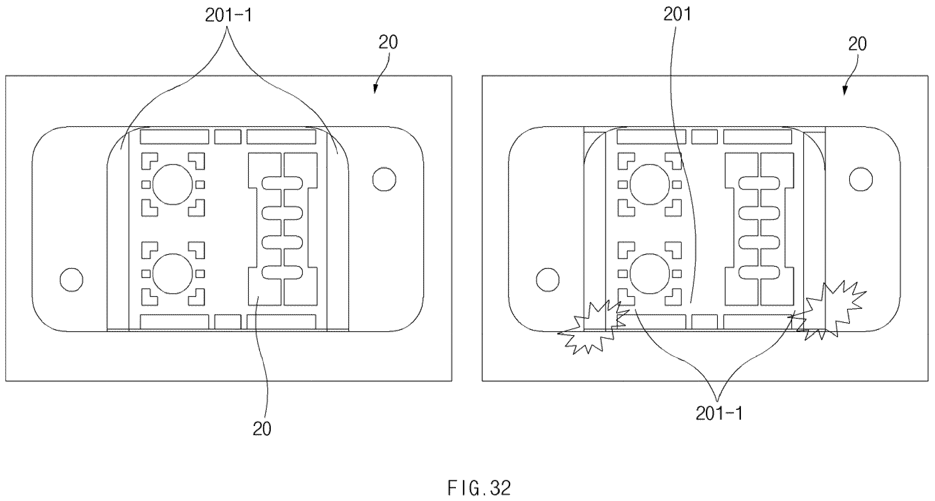

FIG. 28 is a perspective view illustrating a terminal block mounting part of the first connector housing according to the embodiment of the present invention, FIG. 29 is a bottom view illustrating a terminal block mounting part of the first connector according to the embodiment of the present invention, FIG. 30 is a conceptual view illustrating a state in which the first connector is mounted on a first connector mounting part according to the embodiment of the present invention, FIG. 31 is a bottom view illustrating a terminal block mounting part of the second connector according to the embodiment of the present invention, and FIG. 32 is a conceptual view illustrating a state in which the second connector is mounted on a second connector mounting part according to the embodiment of the present invention. Descriptions of the above-described embodiments may be applied equally or similarly to the present embodiment.

Descriptions of the above-described embodiments may be applied equally or similarly to the present embodiment.

As described above, the connectors 10 and 20 may include the body parts 130 and 230, the connection parts 150 and 240 electrically connected to the outside on one sides of the body parts 130 and 230, and the mounting parts 140 and 201 that are open on the other sides of the body parts 130 and 230 for the terminals 110, 120, 210, and 220 to be inserted thereinto and mounted on the battery module assembly 3.

The mounting parts 140 and 201 may be mounting parts as the terminal block mounting part and may also be mounting parts mounted on the battery module assembly 3 (or the connector mounting parts 3-1 and 3-2).

The mounting parts 140 and 201 may be formed asymmetrically.

For example, the mounting part 140 may include a protrusion 241-2 that protrudes from one edge in a direction crossing the one edge. In detail, the protrusion 241-2 may extend perpendicular to the one edge, but the present invention is not limited thereto.

In another example, the mounting part 201 may be provided with a rounded portion. In detail, in the mounting part 201, only one side edge may be provided with a rounded portion which is rounded.

Since the mounting parts 140 and 201 are formed asymmetrically, misassembly in which the connector mounting parts 3-1 and 3-2 are mounted on the mounting hole 3-4 in a direction other than a specified direction may be prevented.

The shapes of the mounting parts 140 and 201 are illustrative, and the mounting parts 140 and 201 may be variously designed to prevent the misassembly as long as the mounting parts 140 and 201 are asymmetric.

As described above, although the present invention has been described with reference to the limited embodiments and drawings, the present invention is not limited thereto. It is apparent that those skilled in the art to which the present invention belongs could derive various implementations without departing from the technical spirit of the present invention and the equivalents of the appended claims.

### [Description of Reference Numerals]

1: Energy storing system
2: Battery control unit
3: Battery module assembly
3-1: First connector mounting part
3-2: Second connector mounting part
3-3: Module guide
3-4: Mounting hole
3-5: Guide mounting part
4: Bottom plate assembly
10: First connector
20: Second connector
30: Connector assembly
100: First connector housing
110: First high-voltage terminal
110-1: Protrusion
110-2: Groove portion
111: First high-voltage terminal block
111-1: Protrusion of first high-voltage terminal block
120: First low-voltage terminal
120-1: First protrusion
120-2: Second protrusion
121: First low-voltage terminal block
121-1: First low-voltage upper block
121-2: First low-voltage lower block
130: Body part
131: Holding member mounting portion
140: Terminal block mounting part
141: First high-voltage terminal block mounting portion
141-1: Stopper part
141-2: First protrusion
141-3: Second protrusion
142: First low-voltage terminal block mounting portion
150: Connection part
151: High-voltage connection portion
151-1: Rounded portion
152: Low-voltage connection portion
152-1: Rounded portion
160: Inclined part
170: Holding member
171: Head portion
172: First portion
173: Second portion
200: Second connector housing
201: Terminal block mounting part
201-1: One edge
201-2: Other edge
210: Second high-voltage terminal
211: Second high-voltage terminal block
220: Second low-voltage terminal
221: Second low-voltage terminal block
221-1: Second low-voltage upper block
221-2: Second low-voltage lower block
230: Body part
240: Connection part
241: High-voltage connection portion
242: Low-voltage connection portion
250: Inclined part
310: First block
311: First coupling portion
312: Catching portion
320: Second block
321: Second coupling portion
322: Catching portion
HVLOCK1: First locking structure for second high voltage
HVLOCK2: Second locking structure for second high voltage
LVLOCK1: First locking structure for second low voltage
LVLOCK2: Second locking structure for second low voltage

## Claims

1. A connector comprising:
a connector housing;
a terminal inserted into the connector housing in a predetermined insertion direction; and
a terminal block inserted into the connector housing, surrounding the terminal, and configured to restrict movement of the terminal in an opposite direction to the insertion direction,
wherein the connector housing is provided with a first protrusion configured to lock the terminal block.

2. The connector of claim 1, wherein the connector housing is further provided with a second protrusion configured to lock the terminal.

3. The connector of claim 1, wherein the terminal has a terminal protrusion protruding in a direction crossing a direction in which the terminal is inserted into the connector housing, and
wherein the connector housing is provided with a second protrusion protruding inward to lock the terminal protrusion.

4. The connector of claim 1, wherein the terminal block is provided with a block protrusion protruding outward, and
wherein the first protrusion protrudes inward and is caught by the block protrusion to restrict movement of the terminal block when a force is applied in an opposite direction to a direction in which terminal block is inserted into the connector housing.

5. The connector of claim 1, wherein the terminal includes a terminal protrusion protruding in a direction crossing a direction in which the terminal is inserted into the connector housing, and
wherein the terminal protrusion protrudes toward and is caught by the terminal block.

6. The connector of claim 1, wherein the terminal block includes:
a first terminal block configured to surround the terminal; and
a second terminal block configured to support the first terminal block from the outside in a stacked form to restrict movement of the first terminal block in the opposite direction to the insertion direction in a state in which the first terminal block is inserted into the connector housing.

7. The connector of claim 6, wherein the terminal includes:
a first terminal protrusion protruding in a direction crossing a direction in which the terminal is inserted into the connector housing and caught by the first terminal block; and
a second terminal protrusion extending toward the second terminal block and protruding to be supported by the second terminal block when a force is applied in the opposite direction to the insertion direction.

8. A connector comprising:
a connector housing in which a high-voltage terminal block mounting portion is provided;
a high-voltage terminal inserted into the high-voltage terminal block mounting portion in a predetermined insertion direction; and
a high-voltage terminal block inserted into the high-voltage terminal block mounting portion while surrounding the high-voltage terminal,
wherein the connector housing includes:
a first protrusion protruding inward to restrict movement of the high-voltage terminal block in an opposite direction to the insertion direction; and
a second protrusion protruding inward to restrict movement of the high-voltage terminal in the opposite direction to the insertion direction.

9. The connector of claim 8, wherein the high-voltage terminal is provided with a first terminal protrusion protruding outward to be caught by the second protrusion.

10. The connector of claim 9, wherein the high-voltage terminal block is provided with a block protrusion protruding outward to be caught by the first protrusion.

11. The connector of claim 10, wherein the connector housing is further provided with a low-voltage terminal block mounting portion, and
wherein the connector further comprises:
a low-voltage terminal inserted into the low-voltage terminal block mounting portion in the predetermined insertion direction; and
a low-voltage terminal block inserted into the low-voltage terminal block mounting portion while surrounding the low-voltage terminal.

12. The connector of claim 11, wherein the low-voltage terminal is provided with a second terminal protrusion protruding to be caught by the low-voltage terminal block.

13. The connector of claim 12, wherein the low-voltage terminal block includes:
a low-voltage lower block disposed inside the low-voltage terminal block mounting portion while surrounding the low-voltage terminal; and
a low-voltage upper block configured to support the low-voltage lower block from the outside in a stacked form to restrict movement of the low-voltage lower block in the opposite direction to the insertion direction in a state in which the low-voltage lower block is inserted into the connector housing.
